# EUROPÄISCHE PATENTSCHRIFT

(11) **EP 1 231 773 B1**
(45) Veröffentlichungstag und Bekanntmachung des Hinweises auf die Patenterteilung: **27.07.2005**
(21) Anmeldenummer: 01102804.0
(22) Anmeldetag: 09.02.2001
(51) Int. Cl.: H04N 1/58

(54) **Lokale Schärfung fotografischer Bilder mittels Masken**
Local sharpening of photographic images by utilizing masks
Amélioration locale de la netteté d'images photographiques à l'aide de masques

(43) Veröffentlichungstag der Anmeldung: 14.08.2002
(73) Patentinhaber: IMIP LLC, Wilmington, Delaware 19801 (US)
(72) Erfinder: Kraft, Walter, 8049 Zürich (CH); Nussbaumer, Marc, 8008 Zürich (CH)
(74) Vertreter: Schwabe - Sandmair - Marx

(56) Entgegenhaltungen:
- EP-A- 0 566 915
- US-A- 4 794 531
- US-A- 5 357 353
- US-A- 5 524 162
- POLESEL A ET AL: "Image enhancement via adaptive unsharp masking" IEEE TRANSACTIONS ON IMAGE PROCESSING, MARCH 2000, IEEE, USA, Bd. 9, Nr. 3, Seiten 505-510, XP006556774 ISSN: 1057-7149

## Beschreibung

Die vorliegende Erfindung betrifft ein Verfahren zum Schärfen eines fotografischen Bildes mit Hilfe einer Maske. Sie betrifft weiter eine entsprechende Vorrichtung, ein Programm, ein Computerprogrammmedium mit dem Programm und Bildausgabegeräte, wie fotografische Printer oder Drucker oder fotografische Labors oder Monitor (z.B. LCD- oder CRT-Display) oder Computer mit Monitor, die das Verfahren oder das Programm oder die Vorrichtung einsetzen.

Schärfungsverfahren sind beispielsweise aus A. Polesel, G. Ramponi, "Image Enhancement via Adaptive Unsharp Masking", IEEE Trans. Image Processing, Vol. 9, Nr. 3, Seiten 505-510, März 2000, oder N. Arad, C. Gotsman, "Enhancement by Image-Dependent Wraping", IEEE Trans. Image Processing, Vol. 8, Nr. 8, Seiten 1063-1074, August 1999, bekannt. Die Schärfungsverfahren basieren auf einer Bestimmung der Schärfe (des Kontrasts) an dem Ort, an dem die Schärfung vorzunehmen ist. Der Kontrast (die Schärfe) wird hierzu basierend auf Helligkeitsdaten der benachbarten Bildelemente berechnet, indem Differenzen zwischen den verschiedenen Helligkeitsdaten nach gewissen Vorschriften berechnet werden.

Schärfungsverfahren sind außerdem aus US 4,794,531 und EP 0 566 915 bekannt. In US 4,794,531 wird ein Verfahren offenbart, bei welchem die Schärfung unter anderem von der Standard-Abweichung und der Dichte der Bildwerte abhängig ist. In EP 0 566 915 wird ein Verfahren offenbart, bei welchem ein Operator einen Bildbereich unter Bezug auf eine Referenzfarbe auswählt, der dann einer Schärfung unterzogen wird.

Aufgabe der Erfindung ist es, eine lokale Schärfung von fotografischen Bilddaten zu ermöglichen, um das Bild global zu verbessern.

Vorstehende Aufgabe wird durch die Gegenstände der Ansprüche 1, 10, 11 und 12 gelöst.

Das erfindungsgemäße Verfahren setzt (insbesondere digitale) Masken zur Schärfungskorrektur ein. Eine Maske bedeutet hierbei eine Zuordnung zwischen Werten (die hierin als Elemente der Maske bezeichnet werden) und Teilen des Bildes, wobei diese Bildteile einen Ort im Bild darstellen und z.B. ein Bildelement (Pixel) oder mehrere Bildelemente (Pixel) umfassen können. Die Elemente der Maske stellen somit eine Vorschrift zur lokalen Änderung der Schärfe des Bildes in einem gewissen Bildteil dar. Sie beschreiben insbesondere den Grad oder das Ausmaß der vorzunehmenden Schärfung, insbesondere Kontrasterhöhung oder Kontrastverminderung an den jeweiligen Orten, an denen die Schärfung vorgenommen wird.

Der globale Kontrast, im folgenden auch einfach nur "Kontrast" genannt, entspricht insbesondere der Differenz (und/oder dem Verhältnis) zwischen maximaler und minimaler Helligkeit im (gesamten) Bild. Bevorzugt wird der globale Kontrast basierend auf einem Bild ermittelt, das einem Bilddetailentfernungsverfahren unterzogen wurde. Bevorzugt wird der globale Kontrast basierend auf einem Bild mit einer reduzierten Auflösung ermittelt. Der Vorteil liegt hierbei daran, dass die Empfindlichkeit auf Rauschen und auf unwesentliche Bilddetails geringer wird.

Der Detailkontrast, der im folgenden auch lokaler Kontrast genannt wird, bezeichnet insbesondere die Differenz (oder das Verhältnis) zwischen maximaler und minimaler Helligkeit in einer gewissen Umgebung eines Bildpunktes. Bevorzugt wird der Detailkontrast wieder basierend auf einem Bild ermittelt, das einem Detailentfernungsverfahren unterzogen wurde und insbesondere bei einem Bild ermittelt, das eine reduzierte Auflösung hat.

Grundsätzlich wird die Bildschärfe durch das Auflösungsvermögen der Kameraoptik begrenzt. Dies wird durch den "modulation transfer factor" (als Funktion der Ortsfrequenz) beispielsweise charakterisiert. Eine ungenaue Fokussierung bewirkt eine zusätzliche Verunschärfung. Bei einer mangelnden Tiefenschärfe können nicht alle Objekte einer Szene gleich scharf abgebildet werden. Die Schärfe wird bevorzugt aufgrund des hoch aufgelösten Bildes beurteilt. Dementsprechend wird die im folgenden erwähnte Schärfungs-Korrekturmaske bevorzugt auf das hoch aufgelöste Bild (Feinbild) angewendet. Als Maß für die Unschärfe kann z.B. die Anzahl der Pixel, über welche eine scharfe Kante "verschmiert" wird, verwendet werden. Der Schärfeeindruck kann beispielsweise durch Filterung (mit einem Filter, welches die höheren Ortsfrequenzen anhebt) verbessert werden.

Erfindungsgemäß wird die globale Schärfung insbesondere in Abhängigkeit vom lokalen Kontrast durchgeführt.

Die Elemente der Schärfungs-Korrekturmaske beschreiben insbesondere den Grad der vorzunehmenden Kontraständerungen für die einzelnen Bildelemente lokal, also insbesondere die Änderung des lokalen Kontrasts (Detailkontrasts). Besonders bevorzugt beschreiben die Elemente der Schärfungs-Korrekturmaske die Änderung der Schärfe, die mittels eines Schärfeänderungsverfahrens vorgenommen wird.

Zur Bestimmung der Elemente wird insbesondere Information über eine Bildeigenschaft, insbesondere eine lokale Bildeigenschaft (insbesondere die Bildeigenschaft an dem dem Element zugeordneten Ort) verwendet. Bei der Bildeigenschaft handelt es sich bevorzugt um den lokalen Kontrast (Detailkontrast) an dem dem Element zugeordneten Ort (oder um die lokale Helligkeit). Erfindungsgemäß werden die Elemente nicht nur basierend auf einer Bildeigenschaft bestimmt, sondern weitere Information, die das Bild betrifft, wird zur Bestimmung der Elemente verwendet.

Vorzugsweise verwendet das erfindungsgemäße Verfahren zum Schärfen ein Schärfeänderungsverfahren, wobei die Elemente der Schärfungs-Korrekturmaske die durch das Schärfeänderungsverfahren erzeugte Änderung der Schärfe festlegen.

Die Schärfeänderung kann allgemein so erfolgen, dass die Schärfe (lokal) einem Sollschärfewert oder einem Bereich für die Sollschärfe zumindest angenähert ist oder den Sollschärfenwert erreicht oder in dem Sollschärfenwertbereich liegt.

Die vorliegende Erfindung betrifft Schärfungs-Korrekturmasken, die eine Bildeigenschaft beeinflussen, nämlich die Schärfe. Eine Bildeigenschaft ist eine von einem menschlichen Betrachter wahrgenommene Erscheinungseigenschaft des Bildes und insbesondere der Bildbereiche, wie z.B. Helligkeit, Farbton, Farbsättigung, Intensität einer Farbe (z.B. der Wert von r bei einem RGB-Vektor oder der Wert von c bei einem CMY-Vektor), Schärfe, Kontrast, mittlere Helligkeit, mittlere Farbe, relative Anzahl von Punkten mit einer charakteristischen Farbe (z.B. "Memory Color"), globaler Kontrast (Differenz zwischen maximaler und minimaler Helligkeit), feiner und mittlerer Detailkontrast, Histogramm der Helligkeitswerte (Merkmalvektor), Farbhistogramm (Mermalmatrix), mittlere Farbsättigung, Helligkeitsgradient links/rechts, oben/unten, usw. Bildeigenschaften sind beispielsweise in R.W.G. Hunt, "Color reproduction by photography", Rep. Prog. Phys. 1977, 40, pp. 1071-1121) beschrieben.

Erfindungsgemäß wird die Schärfungs-Korrekturmaske aus den zu korrigierenden fotografischen (insbesondere digitalen) Bilddaten (z. B. Originalbilddaten) oder daraus abgeleitete Bilddaten bestimmt.

Die Elemente der Korrekturmaske werden als "Korrekturelemente" bezeichnet. Die Korrekturelemente sind Orten im Bild zugeordnet, die Teile des Bildes betreffen. Ein derartiger Bildteil kann einem Bildelement (Pixel) entsprechen, wobei ein Bilddatum genau einem Pixel zugeordnet ist. Der Bildteil kann aber auch mehrere Bildelemente umfassen. Die Korrekturelemente legen die Korrektur für diejenigen Bilddaten fest, die die Bildteile betreffen und für diese die Bildeigenschaft festlegen. Die Korrekturelemente legen die Änderung der Schärfe in den Bildteilen fest, die ihnen zugeordnet sind.

Um die Korrektur zu erzielen, wird die Korrekturmaske auf die Bilddaten angewendet. Hierzu wird ein Schärfeänderungsverfahren verwendet, z.B. adaptive Hochpassfilterung oder Warp-Sharpening, bei dem der Umfang der lokalen Schärfung in einem Bildteil in Abhängigkeit von dem Maskenelement erfolgt, das diesem Bildteil zugeordnet ist. Für diese Verknüpfung wird vorzugsweise ein geeigneter Farbraum gewählt, wobei vor und/oder nach der Verknüpfung eine Transformation in einem anderen Farbraum stattfinden kann.

Gemäß einer Ausführungsform wird die Schärfungs-Korrekturmaske nicht nur in Abhängigkeit von einer Bildeigenschaft (z.B. Detailkontrast), sondern in Abhängigkeit von mehreren Bildeigenschaften bestimmt.

Ein wesentlicher Aspekt der Erfindung ist es, dass die Schärfungs-Korrekturmasken so gestaltet werden, dass im Bild enthaltene Detailinformation nicht verloren geht. Zu diesem Zweck werden die Elemente der Korrekturmaske vorzugsweise so gestaltet, dass sie benachbarte Bildelemente möglichst gleich oder nur wenig unterschiedlich korrigieren. Um dies zu erzielen, können verschiedene Methoden angewendet werden. Beispielsweise können die das Bild darstellenden Bilddaten vor und/oder nach der Korrektur einem Verfahren unterzogen werden, das eine Weichzeichnung bewirkt, wie z.B. ein Datenreduktionsverfahren (z. B. Downsampling-Verfahren) eine Tiefpassfilterung, ein Mittelungsverfahren oder einem Gauß-Filter. Auch können durch diese Verfahren, die der Entfernung von Bilddetails dienen, Bilder erzeugt werden, die das ursprüngliche Bild ohne Details, also "grob" wiedergeben. Derartige Bilder werden im folgenden "Grobbilder" genannt. Basierend auf diesen Grobbildern können unscharfe Masken erzeugt werden. Vorzugsweise werden die unscharfen Masken auf Grund eines niedrig aufgelösten Bildes (Grobbildes) berechnet, das beispielsweise durch Downsampling erzielt wurde, wodurch insbesondere Rechenkapazität eingespart werden kann. Bilder die die Bilddetails enthalten, die also keinem Detailentfernungsverfahren unterzogen wurden, werden im folgenden auch als "Feinbild" bezeichnet. Die das Feinbild darstellenden Bilddaten werden als "Feinbilddaten" bezeichnet. Die Korrekturmasken können direkt aus den Feinbilddaten bestimmt werden. Aus den oben genannten Gründen werden sie jedoch bevorzugt basierend auf Grobbilddaten bestimmt, die von den Feinbilddaten (z.B. Originalbilddaten) abgeleitet werden. Entsprechend ist das Grobbild von dem Feinbild (Originalbild) abgeleitet.

Das Grobbild wird durch Grobbilddaten dargestellt, die aus dem Detailentfernungsverfahren hervorgehen. Wie das Originalbild (Feinbild) hat auch das Grobbild eine Vielzahl von Bildelementen, die im Folgenden als "Grobbildelemente" bezeichnet werden, wobei "Grobbildteile" gleich einem Grobbildelement sein können oder mehrere Grobbildelemente aufweisen können. Eine Korrekturmaske, die basierend auf den Grobbilddaten gewonnen wird, wird als eine Grobkorrekturmaske bezeichnet, deren Elemente sich auf die Grobbildteile beziehen. Die Elemente der Grobbildmaske beschreiben Änderungen des Kontrastes des Grobbildes, die als "Grobänderungen" bezeichnet werden und die die Änderung der Bildeigenschaften oder mindestens einer Bildeigenschaft der Grobbildteile festlegen. Die Grobänderungen werden im Hinblick auf die Kontraständerungen gestaltet, die von der Korrekturmaske vorzunehmen sind. Beispielsweise werden die Elemente der Grobkorrekturmaske so gestaltet, dass sie den Kontrast des Grobbildes ändern. Falls das Grobbild aus einem Datenreduktionsverfahren gewonnen wurde, kann die Korrekturmaske dann auf der Grobkorrekturmaske durch ein Ausweitungsverfahren ("Upsampling") gewonnen werden. Falls die Anzahl der Grobbildelemente der Anzahl der Feinbildelemente entsprechen sollte, das Grobbild also weniger Details enthält aber kein Datenreduktionsverfahren angewendet wurde, kann die Korrekturmaske der Grobkorrekturmaske gleichgesetzt werden.

Erfindungsgemäß ist die durch die Elemente festgelegte Kontraständerung sowohl eine Funktion des lokalen Kontrasts, also des Kontrasts an dem Ort, auf den sich das Maskenelement bezieht, als auch eine Funktion von zusätzlicher Information, die das Bild betrifft. Diese zusätzliche Information kann aus den Bilddaten gewonnen werden (z.B. Information über den Farbton oder über Bildbereiche die Haut darstellen), wie weiter unten noch erläutert wird, oder kann zusätzlich zu den Bilddaten in das erfindungsgemäße Verfahren oder das erfindungsgemäße System eingegeben werden oder von diesem empfangen werden. Beispielsweise kann es sich um Information über die Situation bei der Bilderfassung (Einsatz eines Blitzlichtes, Kameraeinstellungen usw.) oder um Informationen über das Bilderfassungsgerät (Kamera) handeln. Letzteres betrifft insbesondere Information über den Kameratyp, Filmtyp, Bilddatenverarbeitungsprozesse (z.B. Metainformation über die Bildkomprimierung, z.B. bei JPEG), die bereits vorab durchgeführt wurden, usw.

Durch die zusätzliche, das Bild betreffende Information ist es möglich, eine an die Besonderheiten des Bildes angepasste Schärfung vorzunehmen.

Gemäß einer Ausführungsform handelt es sich bei der zusätzlichen Information um Information über lokale Bildeigenschaften, die durch Analyse der Bilddaten gewonnen wird und die zusätzlich zur Information über den lokalen Kontrast (und/oder die lokale Helligkeit) vorhanden ist. Bei der zusätzlichen lokalen Bildeigenschaft kann es sich um den Farbton und/oder den Farbkontrast und/oder die Farbsättigung handeln, die lokal gegeben ist, das heißt bei dem Bildelement oder den Bildelementen, auf das sich die Elemente der Korrekturmaske beziehen oder in der Nachbarschaft dieser Elemente.

Bei der durch die Schärfungskorrekturmaske vorgenommenen Kontraständerung handelt es sich insbesondere um eine Änderung des Helligkeitskontrasts. Der Helligkeitskontrast ist eine Funktion der Differenz der Helligkeitswerte benachbarter Bildelemente.

Bei der durch die Korrekturmaske bewirkten Änderung kann es sich auch um eine Änderung des Farbkontrastes handeln. Der Farbkontrast wird beispielsweise als Funktion des Abstandes der Farbwerte von benachbarten Bildelementen in der Farbebene (a,b-Ebene) definiert. Der Farbkontrast kann auch als Funktion der Differenzen der Farbintensität benachbarter Bildelemente definiert werden. Beispielsweise kann der Farbkontrast für Rot als Funktion der Differenzen der r-Werte (eines r,g,b-Vektors) benachbarter Bildelemente definiert werden. Eine Korrekturmaske, die den Farbkontrast einer bestimmten Farbe korrigiert, wirkt also vorzugsweise nur auf den Aspekt der Bilddaten, der diese Farbe darstellt, (z.B. dem r-Wert) wohingegen die Korrekturmaske, die eine Änderung des Helligkeitskontrasts bewirkt, auf den Aspekt der Bilddaten vorzugsweise wirkt, der die Helligkeit darstellt (z.B. dem L-Wert bei einem Lab-Vektor).

Der Farbkontrast kann für unterschiedliche Farben unterschiedlich geändert werden. Beispielsweise gibt es somit eine Korrekturmaske, die den Farbkontrast für die Farbe Rot ändert, eine weitere Korrekturmaske, die den Farbkontrast für die Farbe Grün ändert und schließlich noch eine Korrekturmaske, die den Kontrast für die Farbe Blau ändert. Natürlich sind auch Korrekturmasken für andere Farben (z.B. C, M, Y) möglich. Vorzugsweise handelt es sich um unabhängige Farben, die einen Farbraum aufspannen.

Durch die Anpassung der Schärfungs-Korrekturmaske an die zusätzlichen lokalen Bildeigenschaften kann eine vorteilhafte Schärfung erzielt werden. Beispielsweise kann für typische Farbtöne (z.B. Hauttöne) der Kontrast eher vermindert werden, während er für andere typische Farbtöne (z.B. Vegetationsgrün) der Kontrast eher erhöht wird. Auch kann es in Bereichen geringer Farbsättigung eher erwünscht sein, den Kontrast abzusenken, um ein mögliches Rauschen zu verhindern, während es in Bereichen hoher Farbsättigung eher erwünscht sein kann, den Kontrast zu erhöhen, um Strukturen noch deutlicher hervortreten zu lassen.

Gemäß einer weiteren Ausführungsform handelt es sich bei der zusätzlichen Information zusätzlich oder alternativ um Information über den Bildinhalt. Diese Information kann über Zusatzdaten gewonnen werden, die zusätzlich zu den Bilddaten empfangen wurden. Beispielsweise kann die Information übermittelt werden, dass an der Kamera bei der Bilderfassung der Aufnahmetyp Portraitaufnahmen eingestellt wurde. Dementsprechend kann darauf geschlossen werden, dass der Bildinhalt Bereiche enthält, die Haut zeigen. Falls die zusätzlichen Daten anzeigen, dass ein Blitzlicht verwendet wurde, kann darauf geschlossen werden, dass es mit einer gewissen Wahrscheinlichkeit überbelichtete und unterbelichtete Bereiche in dem Bild gibt. Auf Grund der zusätzlichen Information können somit die Bilder unterschiedlichen Klassen zugeordnet werden, wobei dann in Abhängigkeit von den Klassen eine Bestimmung der Elemente der Korrekturmaske erfolgt oder die bereits bestimmten Elemente einer klassenabhängigen Korrektur unterzogen werden.

Vorzugsweise erfolgt die Bestimmung der zusätzlichen Information über den Bildinhalt basierend auf einer Analyse der Bilddaten, vorzugsweise zumindest auf einem Großteil der Bilddaten. Basierend auf der Analyse der Bilddaten kann beispielsweise das Bild klassifiziert werden. Abhängig von der Klasse (z.B. Sonnenuntergang, Blitzlichtaufnahme, Portraitaufnahme usw.) wird dann die Schärfungskorrekturmaske bestimmt.

Vorzugsweise werden die Bilddaten analysiert, um charakteristische Bildbereiche zu erkennen. Charakteristische Bildbereiche sind Bildbereiche, die häufig in fotografischen Bildern vorkommen. Dazu zählen z.B. Bereiche, die ein Gesicht oder menschliche Haut darstellen, Bereiche, die Vegetation, z.B. Bäume, darstellen, Bereiche, die Gebäude darstellen oder Straßen darstellen, Bereiche, die Himmel oder Strand darstellen usw. Die charakteristischen Bildbereiche können aus benachbarten Bildelementen bestehen, müssen aber nicht. Üblicherweise ist ein Großteil der Bildelemente eines charakteristischen Bereichs benachbart.

Derartige Bereiche können beispielsweise durch Mustererkennung, z.B. bei der Gesichtserkennung oder durch Erkennen von Strukturen bestimmt werden. Beispielsweise ist eine Gesichtserkennung über ein Mustererkennungsverfahren möglich. Dazu ist nicht unbedingt Information über Farbtöne erforderlich.

Vorzugsweise wird Information über den Farbton zur Erkennung charakteristischer Bereiche verwendet. Beispielsweise hat Haut, Himmel oder Vegetation eine typische charakteristische Farbe oder belegt zumindest im Farbraum typischerweise einen gewissen Bereich. Durch statistische Analyse einer Vielzahl von Bildern kann beispielsweise festgestellt werden, mit welcher Wahrscheinlichkeit ein gewisser Farbton zu einer gewissen charakteristischen Farbe gehört.

Ist ein charakteristischer Bildbereich erkannt, so erfolgt die Bestimmung der Schärfungs-Korrekturmaske basierend auf dieser Erkennung. Die Bestimmung der Korrekturmaske kann dabei beispielsweise so erfolgen, dass in einer ersten Stufe die Korrekturmaske basierend auf dem lokalen Kontrast oder der lokalen Helligkeit erfolgt und in einem nächsten Schritt dann die Elemente der Korrekturmaske so geändert werden, dass sie sich einer Soll-Schärfe oder einem Sollschärfenbereich zumindest annähern, die bzw. der für den erkannten charakteristischen Bildbereich vorgegeben ist. Vorzugsweise wird eine Zuordnungsvorschrift bereitgestellt, die Sollschärfen oder Bereiche für Sollschärfen verschiedenen Typen von charakteristischen Bildbereichen zuordnet.

Die Bestimmung der Schärfungs-Korrekturmaske kann dabei zusätzlich basierend auf einem Zugehörigkeitsmaß erfolgen. Das Zugehörigkeitsmaß beschreibt den Grad der Zugehörigkeit eines Bildelements zu einem charakteristischen Bildbereich. Bei dem oben gegebenen Beispiel beschreibt das Zugehörigkeitsmaß beispielsweise den Grad der Wahrscheinlichkeit, mit dem eine Farbe zu einem charakteristischen Farbton und damit zu einem charakteristischen Bildbereich gehört. Die Korrektur einer in einer ersten Stufe bestimmten Maske erfolgt dann in Abhängigkeit von dem Zugehörigkeitsmaß in Richtung auf die Soll-Schärfe. Das heißt, je größer das Maß der Zugehörigkeit ist, umso weiter erfolgt eine Annäherung an die Soll-Schärfe.

Die Erfinder der vorliegenden Anmeldung haben herausgefunden, dass beim Übergang zwischen charakteristischen Bildbereichen eine Veränderung des Kontrastes, insbesondere eine Bildschärfung kritisch ist und leicht zu Artefakten führen kann. Erfindungsgemäß wird deshalb das Bild oder ein davon abgeleitetes Bild (beispielsweise ein Grobbild) auf Übergänge zwischen Bildbereichen untersucht, die eine unterschiedliche Struktur aufweisen, das heißt beispielsweise, ob hohe oder tiefe Raumfrequenzen dominieren oder ob sich eine Bildeigenschaft des einen Bildbereichs sich von derselben Bildeigenschaft des benachbarten Bildbereichs sich wesentlich (z.B. um einen vorgegebenen Schwellenwert oder Faktor) unterscheidet. Derartige Übergänge gibt es beispielsweise zwischen Wald und blauem Himmel. Ein derartiger Übergang kann neben einer Analyse der Raumfrequenzen beispielsweise durch Analyse der Verteilung der Kontrastwerte detektiert werden. In hochstrukturierten Bereichen stellt sich ein hoher mittlerer Detailkontrast ein, während in niedrig strukturierten Bereichen der mittlere Detailkontrast niedrig ist. Übergangsbereiche lassen sich beispielsweise dort lokalisieren, wo die erste Ableitung des Kontrastverlaufs extreme Werte annimmt. Erfindungsgemäß wird bevorzugt in den Übergangsbereichen keine oder nur eine schwache Kontraständerung vorgenommen, um keine Artefakte zu provozieren. Dies gilt bevorzugt für Bereiche mit hohem Detailkontrast, d.h. falls der Detailkontrast oberhalb eines Schwellenwertes liegt. Alternativ oder zusätzlich kann der Verlauf der Kontrastwerte nach erfolgter Schärfung durch die Korrekturmaske in den Übergangsbereichen einer Glättung unterzogen werden. Der Übergang zwischen schwach strukturierten und stark strukturierten Bereichen wird bevorzugt nur bei komprimierten Bildern, besonders bevorzugt nur bei block-komprimierten Bildern (DCT-Kompression, JPEG) bei der Bestimmung der Masken in oben genannter Weise berücksichtigt, denn (zu starkes) Schärfen verstärkt kompressionsbedingte Artefakte ("Ringing"). "Ringing" entsteht z.B., wenn Koeffizienten von transformierten Bildern quantisiert werden oder die Anzahl der Koeffizienten reduziert wird. Insbesondere bei diesen Kompressionsverfahren und bei verlustbehafteten Kodierverfahren ("lossy coding") werden die Übergänge also berücksichtigt. Die Berücksichtigung erfolgt vorzugsweise so, dass keine Schärfung erfolgt oder die Schärfe verringert wird (Verunschärfung).

Liegen die Bilddaten in Form von Koeffizienten vor, die die Gewichtung verschiedener Raumfrequenzen bestimmen, wie dies beispielsweise bei den Koeffizienten der Fall ist, die sich durch eine diskrete Kosinustransformation (DCT) ergeben, wie dies bei dem Bildkompressionsverfahren JPEG der Fall ist, so kann anhand der Koeffizienten erkannt werden, wo stark oder schwach strukturierte Bereiche vorhanden sind. Dabei sind stark strukturierte Bereiche Bereiche insbesondere mit einem hohen Anteil hoher Raumfrequenzen und/oder einem hohen Kontrast und schwach strukturierte Bereiche sind insbesondere Bereiche mit einem niedrigen Anteil hoher Raumfrequenzen und/oder mit einem niedrigen Kontrast. Aus der Analyse der Koeffizienten lässt sich dann wiederum ein Übergangsbereich erkennen.

Ist durch Zusatzinformation, die zusätzlich zu den Bilddaten übermittelt wird, bekannt, dass die Bilddaten einem Verfahren unterzogen wurden, das zur Blockbildung führt, wie dies beispielsweise bei JPEG der Fall ist, wo das Bild blockweise (Blöcke mit 8 x 8 Bildelementen) komprimiert wird, so werden bevorzugt die Blockübergänge besonders behandelt. Insbesondere wird die Korrekturmaske (bevorzugt basierend auf dem Feinbild) so gestaltet, dass die Maskenelemente, die sich auf die Blockübergänge oder Blockränder beziehen, keine oder nur eine geringe Änderung des Kontrastes bewirken. Die Blockränder sind Scheinstrukturen, die ohne Berücksichtigung der zusätzlichen Information über das Bild verstärkt werden würden.

Generell wird erfindungsgemäß bevorzugt jegliche Zusatzinformation verarbeitet, aus der sich auf die Position von Artefakten im Bild schließen lässt. Bevorzugt wird bei der Position der Artefakte auf eine Schärfung des Bildes verzichtet.

Die vorliegende Erfindung betrifft weiter eine Vorrichtung (z.B. Hardware und Software oder ASIC) zum Schärfen eines fotografischen Bildes. Diese umfasst vorzugsweise eine Korrekturmasken-Bestimmungseinheit, beispielsweise eine CPU, die beispielsweise die Elemente der Korrekturmaske in einem Speicher bei vorgesehenen Adressen ablegt, um so zu gewährleisten, dass die Elemente Bildteilen zugeordnet werden können. Die Korrekturmasken-Bestimmungseinheit bestimmt aus den Bilddaten, die das zu schärfende Bild darstellen, oder aus daraus abgeleiteten Bilddaten (beispielsweise Grobbilddaten) die Elemente de Korrekturmaske. Dabei legen die Elemente das Ausmaß der vorzunehmenden Schärfung für die einzelnen Bildelemente (oder Grobbildelemente) fest. Vorzugsweise umfasst die Vorrichtung weiter eine Bildeigenschaft-Bestimmungseinheit (z.B. eine Kontrast-/Helligkeits-Bestimmungseinheit), die lokal eine Bildeigenschaft (z.B. den Kontrast) im Bild (oder Grobbild) bestimmt. Basierend auf den bestimmten Werten berechnet die Bestimmungseinheit die Maskenelemente. Vorzugsweise umfasst die Vorrichtung weiter eine Zusatzinformations-Verarbeitungseinheit, die weitere, das Bild betreffende Information verarbeitet und basierend hierauf die Bestimmung der Maskenelemente durch die Bestimmungseinheit beeinflusst. Die erfindungsgemäße Schärfeänderung, die von einer Schärfeänderungseinheit in Abhängigkeit von den Elementen der Korrekturmaske durchgeführt wird, umfasst vorzugsweise die Änderung eines Helligkeitskontrastes und/oder die Änderung mindestens eines Farbkontrastes.

Die Erfindung betrifft weiter ein Programm, das einen Computer veranlasst, das erfindungsgemäße Verfahren auszuführen, sowie ein Computerprogrammmedium, auf dem das Programm gespeichert ist.

Weiter umfasst die vorliegende Erfindung Bildausgabegeräte, wie z.B. fotografische Printer oder Drucker (beispielsweise Tintenstrahldrucker, CRT-Drucker, DMD-Drucker, Fotopapier-Printer, Monitor, CRT-Display, LLD-Display) und fotografische Labors, insbesondere Minilabs und Mikrolabs, aber auch Großlabors, die das erfindungsgemäße Verfahren, die erfindungsgemäße Vorrichtung oder das erfindungsgemäße Programm einsetzen.

Bei der folgenden Beschreibung detaillierter Ausführungsformen werden weitere Merkmale der Erfindung offenbart, wobei Merkmale verschiedener Ausführungsformen miteinander kombiniert werden können.
- Fig. 1: zeigt beispielhaft den Ablauf einer lokalen Schärfekontrolle gemäß der Erfindung;
- Fig. 2: zeigt die Einbindung der erfindungsgemäßen lokalen Schärfekorrektut in ein allgemeines Korrektursystem.

Erfindungsgemäß wird die zusätzliche, das Bild betreffende Information vorzugsweise in der Form von Masken gefasst, die dann zur Korrektur einer bereits bestimmten Schärfungs-Korrekturmaske eingesetzt werden. Dabei gibt es eine eindeutige Zuordnung zwischen den Elementen der Schärfungs-Korrekturmaske und der Zusatzinformationsmaske, um die lokalen Schärfungs-Korrektureigenschaften des erfindungsgemäßen Verfahrens zu optimieren.

Beispielsweise werden Haut-, Himmel- und Vegetationsmasken verwendet, welche die zusätzliche Information darstellen und welche zur Berechnung der Schärfungs-Korrekturmaske oder zur Korrektur einer in einer Vorstufe berechneten Vor-Schärfungs-Korrekturmaske dienen.

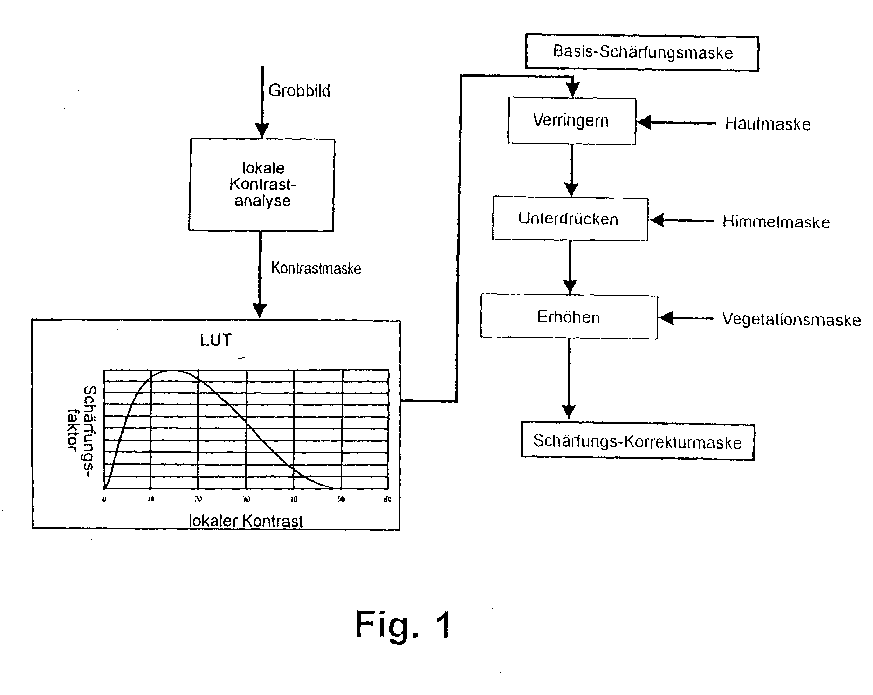

Im folgenden wird beispielhaft beschrieben, wie eine Schärfungs-Korrekturmaske bestimmt wird. Die Erläuterung erfolgt im Hinblick auf die Fig. 1. Als Erstes wird eine Konstrastmaske gebildet, welche den Verlauf des lokalen Kontrastes im Bild charakterisiert. Vorzugsweise erfolgt die dazu erforderliche Analyse auf der Grundlage eines Grobbildes mit einer mittleren Bildauflösung (typischerweise 200 x 250 Pixel). Die so gewonnene Kontrastmaske entspricht der oben erwähnten Grobmaske. Die mittlere Bildauflösung ist vorzugsweise um einen Faktor 3 bis 20 kleiner als die Auflösung des Originalbildes und wird aus dem Originalbild durch ein Datenreduktionsverfahren gewonnen, beispielsweise durch "Downsampling", wobei Bilddaten des Grobbildes Mittelwerte mehrerer benachbarter Bilddaten des Feinbildes darstellen. Vorzugsweise umfasst die mittlere Bildauflösung etwa 20.000 bis 200.000 Pixel. Ein Originalbild umfasst typischerweise über eine Million Pixel und typischerweise zwischen einer Million und fünf Millionen. Als Maß für den Detailkontrast kann z.B. die Differenz zwischen maximaler und minimaler Helligkeit in einer Umgebung des betrachteten Bildpunktes verwendet werden. Der Detailkontrast ist eine lokale Bildeigenschaft und bezeichnet bevorzugt in einer kleineren Umgebung benachbarter Punkte z.B. 5x5, 7x7, 9x9 Pixel usw. Die Umgebung könnte aber auch größer sein, z.B. 100x100 Pixel. Es kann aber auch, wie bereits oben erläutert, ein Farbkontrast bestimmt und berücksichtigt werden.

Die so bestimmte "Kontrastmaske" wird nun über eine Funktion in eine "Basis-Schärfungsmaske" umgerechnet. Die Funktion ist vorzugsweise nichtlinear. Die Funktion kann über eine Tabelle (LUT) definiert werden. Die Elemente der Basis-Schärfungsmaske stellen Schärfungsfaktoren dar und bestimmten den Grad der Schärfung. Der Zusammenhang zwischen Schärfungsfaktoren und lokalen Kontrast ist in Figur 1 gezeigt.

Vorzugsweise haben die Schärfungsfaktoren der Basis-Schärfungsmaske die folgenden Eigenschaften:
- Der Schärfungsfaktor nimmt im Bereich kleiner Detailkontraste ab. Damit wird vermieden, dass in unterbelichteten Bereichen das Rauschen angehoben wird und dass homogene Bildbereiche (wie z.B. Himmel) ein "körniges" Aussehen erhalten.
- Der Schärfungsfaktor nimmt in Bereichen höherer Detailkontraste vorzugsweise monoton bis auf 0 ab. Damit wird erreicht, dass bereits scharfe Bildbereiche nicht überschärft werden und dass im Bereich scharfer Kanten keine störenden Überschwinger entstehen.
- Bevorzugt im Bereich mittlerer Detailkontrastwerte oder in etwa bei 10% bis 50%, bevorzugt bei 20% bis 40% des maximal festgestellten Kontrastes nimmt die Funktion ein Maximum ein.
- Die Funktion, insbesondere nichtlineare Funktion wird vorzugsweise derart auf das Ausgabemedium angepasst und optimiert, dass eine maximale Schärfung ohne Artefakte erreicht wird. Dies geschieht vorzugsweise anhand von Testpatches. Testpatches sind Testbilder, auf die die Schärfungs-Korrekturmaske angewendet wird, die basierend auf der Basis-Schärfungsmaske bestimmt wurde. Durch visuelle oder automatische Analyse der Testpatches kann die Güte der Schärfungs-Korrekturmaske und damit der nichtlinearen Funktion bestimmt werden. Durch iterative Verfahrensweisen lässt sich somit die nichtlineare Funktion optimieren. Testpatches sind üblicherweise aus einem Streifenmuster aufgebaut, wobei die Streifen unterschiedliche Detailkontraste (Helligkeitsstufen) aufweisen.

Bei der Basis-Schärfungsmaske handelt es sich bevorzugt, wie bei der Kontrastmaske um eine Grobmaske, d.h. sie basiert auf Grobbilddaten, die keine Detailinformation enthalten. Die Grobbilddaten werden durch ein Detailentfernungsverfahren aus den Feinbilddaten bestimmt. Wurde als Detailentfernungsverfahren ein Datenreduktionsverfahren (z.B. "Downsampling") verwendet, so haben die Grobmasken eine reduzierte Elementzahl, die vorzugsweise der Elementzahl des Grobbildes entspricht. Die Basis-Schärfungsmaske liegt bevorzugt aber nicht notwendigerweise mit dieser reduzierten Elementzahl vor. Die Basis-Schärfungsmaske wird in einem nächsten Verfahrensschritt nun korrigiert, um dann letztendlich die Schärfungs-Korrekturmaske zu erhalten. Die Korrektur wird wieder bevorzugt mit reduzierter Elementzahl durchgeführt. In diesem Fall muss dann die korrigierte Basis-Schärfungsmaske noch einem Ausweitungsverfahren (z.B. Interpolationsverfahren) unterzogen werden, um eine Schärfungs-Korrekturmaske zu erhalten, deren Elementzahl der Elementzahl des zu korrigierenden Feinbildes entspricht.

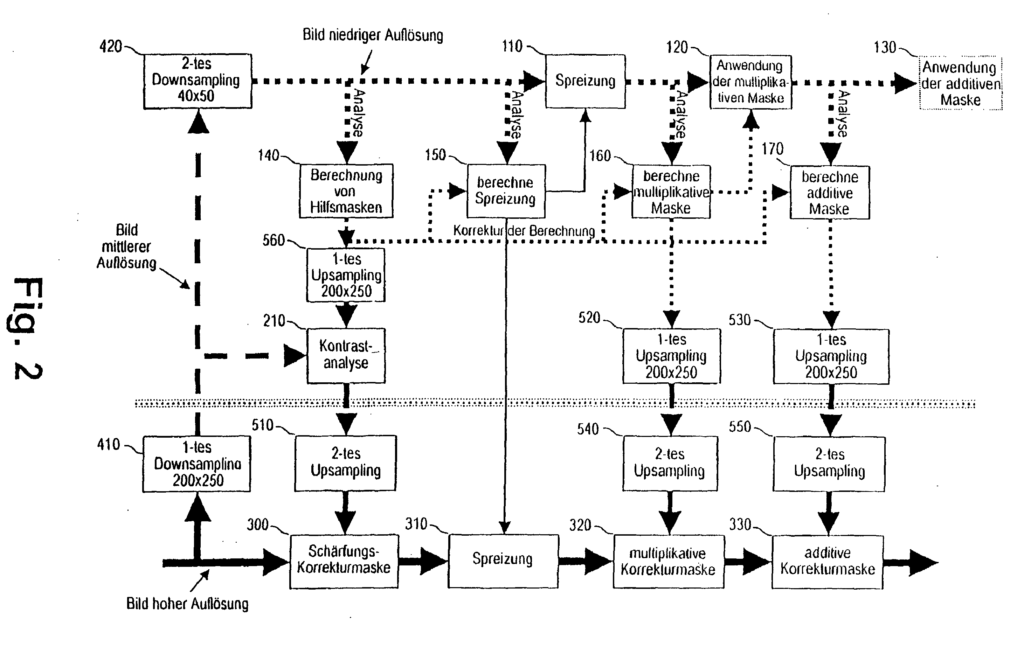

Die Basis-Schärfungsmaske wird bevorzugt basierend auf anderen Masken, sogenannten Zusatzinformationsmasken oder Hilfsmasken (siehe Figur 2) korrigiert. Dabei ist bevorzugt ein Element der Zusatzinformationsmaske eindeutig einem Element der Basis-Schärfungsmaske zugeordnet und beschreibt das Ausmaß der Änderung des zugeordneten Elements der Basis-Schärfungsmaske. Die Zusatzinformationsmasken (Hilfsmasken) werden bevorzugt basierend auf einem Grobbild, z.B. demjenigen, welches der lokalen Kontrastanalyse zugrunde gelegt wurde, bestimmt oder basierend auf einer Analyse dieses Grobbildes. Beispielsweise können die Elemente der Zusatzinformationsmaske eine Funktion der lokalen Helligkeit oder der lokalen Farbsättigung oder des lokalen Farbtons sein. Vorzugsweise stellen die Zusatzinformationsmasken Information über den Bildinhalt dar, wie z.B. Information über charakteristische Bildbereiche, wie Haut oder Gesicht. Die Zusatzinformationsmaske wird in diesem Fall auch als Hautmaske bezeichnet. Andere Beispiele für Zusatzinformationsmasken sind die in Figur 1 gezeigten Himmelmasken und Vegetationsmasken.
Vorzugsweise wird in Bildbereichen mit Hautfarbe der Schärfungsfaktor reduziert. Damit wird der Tatsache Rechnung getragen, dass bei übermäßiger Schärfung der Eindruck "unsauberer" Haut entsteht (Pickel, Barthaare). Konkret kann diese Reduktion durch die Multiplikation des Schärfungsfaktors mit dem Ausdruck (1,0 - k x Hautindikator) erfolgen, wobei k < 1, bevorzugt k = 0,5. Der Hautindikator ist ein Maß für die Wahrscheinlichkeit oder Zugehörigkeit eines Bildelements zu einem charakteristischen Bildbereich, der Haut darstellt. Der Wert des Hautindikators eines Bildelements kann beispielsweise anhand des Farbwertes, insbesondere Farbtons und/oder Farbsättigung des Bildelements bestimmt werden. Vorzugsweise werden Verteilungsfunktionen oder Wahrscheinlichkeitsverteilungen vorgegeben, die festlegen, mit welcher Wahrscheinlichkeit oder mit welchem Zugehörigkeitsgrad ein gewisser Farbwert zu einer charakteristischen Farbe (z.B. Hautfarbe) gehört. Je weiter ein Farbwert von einem charakteristischen Farbwert, insbesondere Farbton und/oder Farbsättigung abweicht, desto kleiner ist typischerweise der Zugehörigkeitsgrad. Aus dieser Verteilungsfunktion oder Wahrscheinlichkeitsverteilung lässt sich dann anhand des Farbwertes, insbesondere Farbton und/oder Farbsättigung ein Maß dafür bestimmen, dass ein bestimmter Farbwert zu einer charakteristischen Farbe gehört. Damit ist dann beispielsweise der Hautindikator bestimmt.
- In Bildbereichen mit Himmelfarbe wird vorzugsweise der Schärfungsfaktor nach einem analogen Verfahren ebenfalls reduziert oder sogar auf 0 reduziert.
- In Bildbereichen mit Vegetation wird eine stärkere Schärfung im Allgemeinen vorgezogen. Diese kann analog zu oben mittels der Vegetationsmaske erreicht werden.
- Die letztendlich unter Einbeziehung der zusätzlichen Information bestimmte korrigierte Basis-Schärfungsmaske wird mittels Interpolation ("Upsampling" und "Smoothing"), also einem Datenausweitungsverfahren auf die Auflösung des zu schärfenden Bildes (Feinbildes) gebracht.
- Das Originalbild (Feinbild) wird dann einem Schärfeänderungsverfahren unterworfen, das als Parameter die Elemente der Schärfungs-Korrekturmaske einsetzt. Bei dem Schärfeänderungsverfahren kann es sich beispielsweise um eine ortsvariante Hochpassfilterung handeln, wie dies in A. Polesel, G. Ramponi, "Image Enhancement via Adaptive Unsharp Masking", IEEE Trans. Image Processing, Vol. 9, Nr. 3, Seiten 505-510, März 2000, beschrieben ist. Das heißt das Ausmaß der Schärfung variiert von Bildelement zu Bildelement auf Grund des Wertes der Elemente in der Schärfungsmaske, die den Bildelementen insbesondere eindeutig zugeordnet sind. Beispielsweise kann die Anhebung der höheren Ortsfrequenzen beim Hochpassfiltervorgang (z.B. Erhöhung des Verstärkungsfaktors des Filters und/oder Änderung der Grenzfrequenz des Filters) in Abhängigkeit von den Elementen der Schärfungs-Korrekturmaske geändert werden. Ist eine Verunschärfung erwünscht, so können beispielsweise die höheren Ortsfrequenzen abgesenkt werden. Die Erhöhung oder Verringerung der Schärfe wird allgemein als Schärfeänderung bezeichnet. Die Variation der Schärfung erfolgt dabei graduell, da die Basis für die Schärfungs-Korrekturmaske das Grobbild bildete, das keine Detailinformation enthält. Die Schärfungs-Korrekturmaske kann somit als eine niederfrequente (das heißt unscharfe) Maske angesehen werden. Als Schärfeänderungsverfahren kann bevorzugt ein Verfahren zur Änderung des lokalen Kontrastes verwendet werden, wobei die Änderung des Kontrastes von den Elementen der Schärfungskorrekturmaske abhängt.

Wie bereits oben bemerkt wurde, gibt es verschiedene Möglichkeiten, die Schärfung lokal in Abhängigkeit von der Korrekturmaske durchzuführen. Beim adaptiven Hochpassfilter werden die den Pixeln zugeordneten Werte verändert. Dahingegen lässt das Warp-Sharpening in einem Zwischenschritt die Pixelwerte unverändert. Statt dessen erfolgt eine Verschiebung der Pixel. Auf diese Art und Weise können Überschwinger vermieden werden. Die Funktionsweise des Warp-Sharpenings ist in der bereits oben erwähnten Druckschrift von N. Arad, C. Gotsman beschrieben. Dabei werden mittels eines Edge-Detektors im Bild Kandidaten für Kanten gesucht. Die Ausgabe des Edge-Detektors wird dann weichgezeichnet. Danach wird ein Relieffilter angewandt und aus diesem eine Verschiebungsmaske abgeleitet. Die Originalpixel werden dann um den in der Verschiebungsmaske angegebenen Wert verschoben. Dies kann beispielsweise nach dem Prinzip erfolgen, dass bei einer Verschiebung um mehr als einen halben Pixel die Werte der verschobenen Pixel die Werte der Pixel ersetzen, die bisher an dieser Stelle waren. Werden Stellen durch den Verschiebevorgang frei, so werden beispielsweise die alten Werte beibehalten. Das Ausmaß des Verschiebens kann beispielsweise in Abhängigkeit von den Elementen der Schärfungs-Korrekturmaske erfolgen.

Da die Pixel bei einem derartigen Schärfungsvorgang immer zur Kante hin verschoben werden, werden die Kanten aufgesteilt (steiler gemacht), wodurch eine Schärfung erzielt wird. Eine Verunschärfung würde dadurch erzielt werden, dass die Pixel so verschoben werden, dass die Kanten flacher gemacht werden.

Wie bereits oben erwähnt, kann das Grobbild durch Downsampling oder durch Filterverfahren (Tiefpassfilter, Gaußfilter) oder durch Filterbänke (wie in EP 0 971 315 beschrieben) erzielt werden. Ein Downsampling in einem ersten Schritt und ein Upsampling am Ende des Verfahrens ist also nicht unbedingt nötig, wird jedoch auf Grund der dadurch erforderlichen geringeren Rechenkapazität und des geringeren Speicheraufwands bevorzugt.

Fig. 2 zeigt die Einbindung des erfindungsgemäßen lokalen Schärfungsverfahrens in ein Maskenkorrektursystem, das im Folgenden näher erläutert wird.

Fig. 2 zeigt einen beispielhaften Aufbau für eine erfindungsgemäße Korrekturvorrichtung, wobei die Blöcke jeweils Einheiten repräsentieren, die bestimmte Prozessabschnitte durchführen. Alternativ kann die Fig. 2 auch als Veranschaulichung des erfindungsgemäßen Korrekturverfahrens aufgefasst werden. Die Fig. 2 zeigt insbesondere die Datenflüsse und das Zusammenwirken der einzelnen Komponenten des Systems auf.

Bezugszeichen, die in Fig. 2 mit 1 beginnen, betreffen die niedrigste Auflösung. Bezugszeichen, die mit 2 beginnen, betreffen die mittlere Auflösung und Bezugszeichen, die mit 3 beginnen, betreffen die höchste Auflösung. Bezugszeichen, die mit 4 beginnen, betreffen eine Absenkung der Auflösung, und Bezugszeichen, die mit 5 beginnen, betreffen eine Erhöhung der Auflösung. Die punktierten Linien im oberen Teil des Bildes betreffen die niedrige Auflösung. Die dicken durchgehenden Linien im unteren Teil des Bildes betreffen die hohe Auflösung.
Gemäß dem in Fig. 2 gezeigten Beispiel findet eine Bildanalyse bevorzugt bei den niedrig aufgelösten Bildern statt. Eine Ausnahme stellt die Analyse des lokalen Kontrasts im Block 210 dar. Die Reduktion der Bildauflösung ("Downsampling") erfolgt vorzugsweise in mindestens zwei Stufen. In einer ersten Stufe, die im Block 410 durchgeführt wird, erfolgt eine Verringerung der Auflösung von dem hochaufgelösten Bild (typischerweise über eine Million Bildelemente) auf eine mittlere Auflösung, beispielsweise 200 x 250 Bildelemente. Im Block 420 erfolgt dann in der zweiten Stufe eine weitere Absenkung der Bildauflösung auf eine niedrige Auflösung, beispielsweise 40 x 50 Bildpunkte. Die Analyse kann somit, falls erforderlich, an Bildern unterschiedlicher Auflösung durchgeführt werden.

Die Grobmasken, die in den Blöcken 110, 120 und 130 angewendet werden, werden basierend auf einer Analyse des Grobbildes, das aus dem Block 420 hervorgeht, bestimmt. Die Grobmasken werden anschließend mittels Upsampling in unscharfe Masken (Korrekturmasken) umgewandelt, die bevorzugt der Auflösung des Originalbildes entsprechen, das heißt ein Element der Korrekturmaske entspricht einem Bildelement des Originalbildes oder des zu korrigierenden Feinbildes.

Bevorzugt erfolgt die Erhöhung der Auflösung in der gleichen Anzahl von Stufen, wie die Reduktion der Auflösung, so dass mit unterschiedlicher Auflösung berechnete Masken miteinander (z. B. gewichtet) kombiniert werden können, schon bevor man zur nächsten Auflösung oder nächsthöheren Auflösung übergeht.

Die Reihenfolge der Verarbeitungsschritte, wie sie in Fig. 2 gezeigt sind und wie an den Bilddaten durchgeführt werden, können auch anders gewählt werden. Die dargestellte Verarbeitungskette dient lediglich zur Veranschaulichung des Konzepts. Aus Effizienzgründen ist es natürlich sinnvoll, die einzelnen Verarbeitungsschritte soweit wie möglich zusammenzufassen.

Die Blöcke 110, 150 und 310 dienen dazu, den zur Verfügung stehenden Wertebereich oder Dynamikbereich so gut wie möglich zu nutzen und werden weiter unten näher erläutert. Im folgenden werden zuerst die übrigen Elemente der Fig. 2 näher erläutert.
Zu Beginn wird ein hoch aufgelöstes Bild mit einer Vielzahl von Bilddaten, die jeweils Bildelementen zugeordnet sind, empfangen (im Bild links unten). Die Bilddaten werden im Block 410 in einer ersten Stufe reduziert und dann in dem Block 420 nochmals reduziert. Die nach dem Block 420 vorliegenden reduzierten Bilddaten stellen somit ein Bild niedriger Auflösung (Grobbild) dar. Auf dieses Grobbild wird der Block 110 angewendet, der zu einer Spreizung des Wertebereichs führt, wie weiter unten noch erläutert wird. Auf die dann resultierenden Bilddaten, die immer noch in derselben Auflösung vorliegen, wird dann eine multiplikative Maske 120 angewendet, die beispielsweise die oben erwähnten Effekte auf die Farbsättigung hat. Schließlich wird dann im Block 130 eine additive Maske angewendet, die beispielsweise das Helligkeitsprofil ändert. Danach können weitere Masken angewendet werden, die Bildeigenschaften ändern.

Gemäß Fig. 2 werden basierend auf den Grobbilddaten im Block 140 Hilfsmasken berechnet. Diese Hilfsmasken betreffen beispielsweise charakteristische Bildbereiche, wie Haut, Himmel und Vegetation, und können beispielsweise, wie oben erläutert, bestimmt werden. Anhand dieser Masken ist dann dem System bekannt, welche Bildelemente oder Bildteile zu den charakteristischen Bereichen gehören oder welche zu charakteristischen Farbtönen zugeordnet werden.

Die vorliegende Erfindung betrifft insbesondere nur den linken Teil der Figur 2, d.h. die Blöcke 420, 140, 560, 210, 510, 300 und 410. Dieser Teil kann beliebig mit anderen Korrekturverfahren kombiniert werden, insbesondere mit dem rechten (übrigen) Teil der Figur 2.

Im Block 560 erfolgt eine Ausweitung der Hilfsmasken auf die mittlere Auflösung. Die daraus gewonnenen Informationen werden im Analyseblock 210 verarbeitet, der die lokale Schärfe analysiert. Die Analyse der lokalen Schärfe erfolgt auf der Basis des mittelaufgelösten Bildes. Dies liegt insbesondere daran, dass die Schärfe bei der Position eines Bildelements als Funktion der Bildeigenschaft (z.B. Helligkeit) sowohl an der Stelle des Bildelements als auch an der Stelle benachbarter Bildelemente definiert ist. Eine Besonderheit des erfindungsgemäßen Verfahrens liegt nun darin, dass in die Analyse der lokalen Schärfe nicht nur lokale Daten, also benachbarte Bildelemente betreffende Daten einfliesen, sondern über die im Block 560 ausgeweiteten Hilfsmasken Informationen über den Bildinhalt mit einfließen und in Abhängigkeit davon dann eine Maske bestimmt wird, deren Elemente eine lokale Schärfung festlegen, die sowohl durch jeweils lokale Daten als auch globale Bilddaten (wie z.B. die Zugehörigkeit zu einem charakteristischen Bildbereich) berücksichtigen. Die so im Block 210 gewonnene Schärfungsmaske wird dann im Block 510 ausgeweitet. Die ausgeweitete Schärfungs-Korrekturmaske 300 wird dann auf die hochaufgelösten Bilddaten angewendet.

Die Hilfsmasken werden vorzugsweise auch bei der Berechnung der Nachschlagetabellen im Block 150 verwendet, die dann zur Spreizung der Bilddaten im Block 110 angewendet werden, wie später noch näher erläutert wird. Die in den Hilfsmasken enthaltene Information insbesondere über den Bildinhalt wird bevorzugt auch bei der Berechnung der in den Blöcken 120 und 130 angewendeten Grobmasken berücksichtigt. Die Berechnung der multiplikativen Masken erfolgt im Block 160 und die Berechnung der additiven Masken im Block 170. Die Berechnung der multiplikativen und additiven Masken, also allgemein der Grobmasken, erfolgt im Wesentlichen basierend auf einem Grobbild und die Hilfsmasken werden vorzugsweise zur Korrektur der so berechneten Grobmasken herangezogen.

Beispielsweise erfolgt die Berechnung der multiplikativen Masken im Block 160 basierend auf der Analyse des Grobbildes, das aus der Anwendung der LUTs im Block 110 hervorgeht, also nach Spreizung der Bilddaten. Die berechneten multiplikativen Masken werden dann im Block 120 auf das Grobbild angewendet. Sie führen, wie oben erläutert wurde, beispielsweise zur Änderung der Helligkeit in stark überbelichteten und unterbelichteten Bereichen und zur gleichzeitigen Änderung der Farbsättigung in diesen Bereichen. Durch die multiplikativen Masken noch nicht korrigierte Helligkeitsbereiche können dann in einem nächsten Schritt, nämlich im Block 130 durch die Anwendung additiver Masken korrigiert werden. Die additiven Masken werden dazu bevorzugt aus dem Grobbild berechnet, das sich aus der Anwendung der multiplikativen Masken (oder der multiplikativen Maske) im Block 120 ergibt.

Die im Block 160 berechnete Grobmaske oder die berechneten Grobmasken werden dann bevorzugt durch Ausweitung im Block 520 in eine Maske mittlerer Auflösung, also mit mittlerer Elementzahl, transformiert. In einer weiteren Stufe, im Block 540, erfolgt dann eine nächste Ausweitung, die zu einer Korrekturmaske mit hoher Elementzahl führt. Diese Korrekturmaske wird dann im Block 320 auf die zu korrigierenden Feinbilddaten angewendet, die sich nach der Spreizung im Block 310 ergeben.

In analoger Weise, wie bei der multiplikativen Maske, wird aus der additiven Maske in zwei Stufen, nämlich im Block 530, eine Maske mittlerer Auflösung bestimmt und dann aus der Maske mittlerer Auflösung durch eine weitere Ausweitung im Block 550 eine Maske hoher Auflösung (Korrekturmaske) bestimmt. Diese Korrekturmaske, die auf der additiven Grobmaske basiert, wird dann im Block 330 auf die Bilddaten angewendet, die sich aus der Anwendung der multiplikativen Maske im Block 320 ergeben.

Im folgenden wird die Spreizung erläutert, auf die sich die Blöcke 110, 150 und 310 beziehen. Der Block 150 betrifft die Berechnung dieser Spreizung. Der Block 110 betrifft die Anwendung der Spreizung auf das Grobbild und der Block 310 betrifft die Anwendung der Spreizung auf das Bild hoher Auflösung. Die Spreizung im Block 310 erfolgt mit Hilfe einer Funktion, die im Block 150 ermittelt wurde.

Warum eine derartige Spreizung vorzugsweise durchgeführt wird, wird im Folgenden erläutert. Dabei ist zu beachten, dass die Spreizung des Dynamikbereichs der Bilddaten in dem in Fig. 2 gezeigten Verarbeitungsprozess bei einem gewissen Abschnitt der Verarbeitung durchgeführt wird, und zwar nach Anwendung der Schärfung des Bildes. Die Spreizung kann auch an einer anderen Stelle erfolgen, beispielsweise zu Beginn des Verarbeitungsprozesses der Fig. 2, also vor der Schärfung.

Bei der Aufnahme eines Digitalbildes kann es vorkommen, dass (infolge technischer Begrenzungen in der Kamera, falscher Einstellungen durch den Fotografen usw.) ein generell unterbelichtetes Bild entsteht. In diesem Fall wird in allen drei Farben der zur Verfügung stehende Aussteuerungsbereich (beispielsweise 0 bis 255) nur ungenügend genutzt. Dadurch erscheint das Bild zu dunkel und zu flau.
Amateuraufnahmen entstehen auch häufig unter ungünstigen Belichtungsbedingungen (Glühlampenlicht, Neonlicht usw.). In solchen Fällen wird in mindestens einer der drei Farben der zur Verfügung stehende Aussteuerungsbereich nur ungenügend genutzt. Solche Bilder weisen einen störenden Farbstich auf.

Solche Belichtungsfehler und Beleuchtungsfehler werden vorzugsweise schon am Anfang der Verarbeitungskette (das heißt vor der Anwendung der Korrekturmasken, wie z.B. die oben beschriebenen additiven Masken und multiplikativen Masken) korrigiert.

## Patentansprüche

1. Verfahren zum Schärfen eines fotografischen Bildes mit einer Vielzahl von Bildelementen, bei welchem
eine Schärfungs-Korrekturmaske aus den Bilddaten, die das zu schärfende Bild darstellen, bestimmt wird, wobei die Elemente der Schärfungs-Korrekturmaske die lokale Änderung der Schärfe beschreiben und zur Bestimmung der Elemente neben einer Bildeigenschaft, nämlich dem lokalen Kontrast, zusätzliche, das Bild betreffende Information verwendet wird, wobei gemäß der zusätzlichen, das Bild betreffenden Information in charakteristischen Bildbereichen mit Hautfarbe oder Himmelsfarbe die Schärfung reduziert wird und/oder in Bildbereichen mit Vegetation die Schärfung erhöht wird, wobei die Bildbereiche aufgrund für sie typischer Farbtöne durch Analyse der Bilddaten erkannt werden; und
die Schärfungs-Korrekturmaske auf die Bilddaten angewendet wird.

2. Verfahren nach Anspruch 1, bei welchem die zusätzliche Information, die zur Bestimmung der Elemente herangezogen wird, weiter mindestens den Farbton und/oder die Farbsättigung und/oder den Farbkontrast umfasst, die jeweils lokal in der Nähe der Orte und/oder an den Orten gegeben ist, auf die sich die Elemente der Schärfungs-Korrekturmaske beziehen.

3. Verfahren nach Anspruch 1 mit folgenden Schritten:
die Analyse der Bilddaten führt zur Bestimmung von mindestens einem charakteristischen Bildbereich, wie z.B. einem Bildbereich mit Hautfarbe oder einem Bildbereich mit Vegetation, wobei der charakteristische Bildbereich eine Vielzahl Bildelemente umfasst, und
wobei
- dem mindestens einen, erkannten charakteristischen Bildbereich eine Sollschärfe oder Sollschärfenbereich zugeordnet wird und
- die Änderung mittels der Schärfungs-Korrekturmaske so erfolgt, dass Elemente der Korrekturmaske, die sich auf Bildelemente beziehen, die in dem mindestens einem, erkannten charakteristischen Bildbereich enthalten sind, zumindest eine Annäherung der Schärfe an die zugeordnete Sollschärfe oder den zugeordneten Sollschärfenbereich bewirken.

4. Verfahren nach Anspruch 3, bei welchem aufgrund der Analyse ein Zugehörigkeitsmaß bestimmt wird, das den Grad der Zugehörigkeit oder die Wahrscheinlichkeit der Zugehörigkeit eines Bildelements zu einem charakteristischen Bildbereich festlegt und die Änderung der Schärfe sowohl unter Berücksichtigung der Sollschärfe oder des Sollschärfenbereichs als auch des den jeweiligen Bildelementen zugeordneten Zugehörigkeitsmaßes bestimmt wird.

5. Verfahren nach Anspruch 3 oder 4, bei welchem die Bilddaten für die Bildelemente Farbwerte und Bildeigenschaften festlegen, die zumindest die Helligkeit und den Farbton umfassen, und
wobei die Analyse der Bilddaten zur Bestimmung der charakteristischen Bildbereiche folgendes umfasst:
- eine Zuordnungsvorschrift wird bereitgestellt, die festlegt welcher Farbwert oder welche Farbwerte zu mindestens einem vorbestimmten charakteristischen Farbwert gehört, wobei jedem des mindestens einen charakteristischen Farbwerts eine Sollschärfe oder ein Sollschärfenbereich zugeordnet ist;
- die Farbwerte in dem Bild werden basierend auf den zu schärfenden Bilddaten oder auf Bilddaten, die von den zu schärfenden Bilddaten abgeleitet wurden, bestimmt; und
- es wird bestimmt, ob die bestimmten Farbwerte zu einem des mindestens einen charakteristischen Farbwerts gehören; und
wobei die Bestimmung der Schärfungs-Korrekturmaske in Abhängigkeit von den charakteristischen Bildbereichen folgendes umfasst:
- die Bestimmung der Elemente der Schärfungs-Korrekturmaske erfolgt in Abhängigkeit der Zugehörigkeit der Farbwerte zu einem des mindestens einen charakteristischen Farbwerts, wobei die Bestimmung unter Berücksichtigung der Sollschärfe oder des Sollschärfenbereichs erfolgt, die dem charakteristischen Farbwert zugeordnet ist.

6. Verfahren nach Anspruch 3 bis 5, mit folgenden Schritten:
eine Analyse des zu korrigierenden Bildes oder eines davon abgeleiteten Bildes wird durchgeführt, um Übergänge zwischen Bildbereichen zu erkennen, die eine Vielzahl benachbarter Bildelemente umfassen und die eine unterschiedliche Strukturierung aufweisen;
eine Bestimmung der Elemente der Schärfungs-Korrekturmaske erfolgt in Abhängigkeit davon, ob die Elemente sich auf die Übergänge beziehen oder nicht.

7. Verfahren nach Anspruch 1, bei welchem die zusätzliche Information sich auf die Position von Artefakten im Bild bezieht, wobei die Elemente der Schärfungs-Korrekturmaske weiter in Abhängigkeit davon bestimmt werden, ob sie sich auf Positionen im Bild beziehen, wo Artefakte vorhanden sind oder nicht.

8. Verfahren nach einem der vorhergehenden Ansprüche, bei dem basierend auf der lokalen Kontrastinformation eine Basis-Schärfungsmaske bestimmt wird, deren Elemente basierend auf zugeordneten Elementen einer Zusatzinformationsmaske korrigiert werden, um so die Schärfungs-Korrekturmaske zu erhalten, wobei die Zusatzinformationsmaske aus der zusätzlichen Information bestimmt wird.

9. Verfahren nach einem der vorhergehenden Ansprüche, mit folgenden Schritten:
ein Bilddetailentfernungsverfahren wird auf die zu schärfenden Bilddaten angewendet, so dass die daraus hervorgehenden Grobbilddaten ein Grobbild mit weniger Details als das zu schärfende Bild darstellen, wobei das Grobbild eine Vielzahl von Grobbildelemente aufweist;
basierend auf der lokalen Kontrastinformation des Grobbildes wird eine Grobkorrekturmaske bestimmt, die eine Korrektur der Schärfe des Grobbildes beschreibt,
basierend auf der zusätzlichen Information werden die Elemente der Grobkorrekturmaske korrigiert, wobei die Schärfungs-Korrekturmaske der korrigierten Grobkorrekturmaske entspricht oder basierend auf ihr bestimmt wird.

10. Vorrichtung zum Schärfen eines fotografischen Bildes mit einer Vielzahl von Bildelementen, mit
einer Korrekturmasken-Bestimmungseinheit, die eine Schärfungs-Korrekturmaske aus den Bilddaten, die das zu schärfende Bild darstellen, bestimmt, wobei die Elemente der Schärfungs-Korrekturmaske die lokale Änderung der Schärfe beschreiben, wobei die Korrekturmasken-Bestimmungseinheit die Elemente basierend auf dem lokalen Kontrast und basierend auf zusätzlicher, das Bild betreffende Information bestimmt; wobei die Korrekturmasken-Bestimmungseinheit so ausgebildet ist, dass gemäß der zusätzlichen, das Bild betreffenden Information in charakteristischen Bildbereichen mit Hautfarbe oder Himmelsfarbe die Schärfung reduziert wird und/oder in Bildbereichen mit Vegetation die Schärfung erhöht wird, wobei die Bildbereichen aufgrund für sie typischer Farbtöne durch Analyse der Bilddaten erkannt werden; und
einer Anwendungs - Einheit, die die Schärfungs-Korrekturmaske auf die Bilddaten anwendet.

11. Programm, das, wenn es in einem Computer geladen ist oder auf einem Computer läuft, den Computer veranlasst, das Verfahren nach einem der Ansprüche 1 bis 9 durchzuführen.

12. Computerprogrammmedium, auf dem das Programm nach Anspruch 11 gespeichert ist.

13. Bildausgabegerät, insbesondere fotografischer Printer oder Drucker oder fotografisches Labor, insbesondere Minilab, oder Monitor oder Computer mit Monitor, mit einer Vorrichtung nach Anspruch 10 oder mit einem Computer, auf dem das Programm nach Anspruch 11 läuft oder in den dieses Programm geladen ist.

## Claims

1. A method for sharpening.a photographic image having a plurality of picture elements, in which
a sharpening correction mask is determined from the image data which represent the image to be sharpened, whereby the elements of the sharpening correction mask describe the local change in the sharpness and additional information relating to the image is used for the determination of the elements, apart from an image property, namely the local contrast, whereby in accordance with the additional information relating to the image the sharpening is reduced in characteristic image areas with skin colour or sky colour and/or the sharpening is increased in image areas with vegetation, whereby the image areas are detected on the basis of colours typical for them by analysis of the image data; and
the sharpening correction mask is applied to the image data.

2. A method according to Claim 1, in which the additional information which is used to determine the elements also includes at least the colour and/or the colour saturation and/or the colour contrast, which is given in each case locally in the vicinity of the locations and/or at the locations to which the elements of the sharpening correction mask relate.

3. A method according to Claim 1 with the following steps:
the analysis of the image data results in the determination of at least one characteristic image area, such as e.g. an image area with skin colour or an image area with vegetation, whereby the characteristic image area comprises a plurality of picture elements, and whereby
- a set sharpness or a set sharpness range is assigned to the at least one, detected characteristic image area and
- the change takes place by means of the sharpness correction mask so that elements of the correction mask that relate to picture elements contained in the at least one, detected characteristic image area bring about at least one approximation of the sharpness to the assigned set sharpness or the assigned set sharpness range.

4. A method according to Claim 3, in which on the basis of the analysis a measure of affiliation is determined, which fixes the degree of affiliation or the probability of affiliation of a picture element to a characteristic image area and the change in the sharpness is determined by taking into consideration the set sharpness or the set sharpness range and also the measure of affiliation associated with the respective picture elements.

5. A method according to Claim 3 or 4, in which the image data for the picture elements determine colour values and image properties which include at least the brightness and the colour, and
whereby the analysis of the image data for determining the characteristic image areas includes the following:
- an assignment instruction is prepared, which determines which colour value or which colour values belongs to at least one predetermined characteristic colour value, where a set sharpness or a set sharpness range is assigned to each of the at least one characteristic colour value;
- the colour values in the image are determined on the basis of the image data to be sharpened or on image data which were derived from the image data to be sharpened; and
- it is determined whether the determined colour values belong to one of the at least one characteristic colour value; and
whereby the determination of the sharpening correction mask in dependence on the characteristic image areas includes the following:
- the determination of the elements of the sharpening correction mask takes place in dependence on the affiliation of the colour values to one of the at least one characteristic colour value, where the determination takes place taking into consideration the set sharpness or set sharpness range, which is assigned to the characteristic colour value.

6. A method according to Claims 3 to 5, with the following steps:
- an analysis of the image to be corrected or of an image derived therefrom is carried out in order to detect transitions between image areas which comprise a plurality of adjacent picture elements and which have different structuring;
- a determination of the elements of the sharpening correction mask takes place in dependence on whether the elements relate to the transitions or not.

7. A method according to Claim 1, in which the additional information relates to the position of artefacts in the image, where the elements of the sharpening correction mask are further determined in dependence on whether they relate to positions in the image where artefacts are present or not.

8. A method according to one of the preceding Claims, in which, on the basis of the local contrast information, a basic sharpening mask is determined whose elements are corrected on the basis of the assigned elements of an additional information correction mask, in order to obtain the sharpening correction mask, whereby the additional information mask is determined from the additional information.

9. A method according to one of the preceding Claims, with the following steps:
an image detail removal method is applied to the image data to be sharpened so that the coarse image data coming from it represent a coarse image with fewer details than the image to be sharpened, whereby the coarse image comprises a plurality of coarse image elements;
a coarse correction mask describing a correction of the sharpness of the coarse image is determined on the basis of the local contrast information of the coarse image,
the elements of the coarse correction mask are corrected on the basis of the additional information, with the sharpening correction mask corresponding to the corrected coarse correction mask or being determined on the basis of it.

10. A device for sharpening a photographic image with a plurality of picture elements, having
a correction mask determination unit, which determines a sharpening correction mask from the image data representing the image to be sharpened, whereby the elements of the sharpening correction mask describe the local change in the sharpness, whereby the correction mask determination unit determines the elements on the basis of the local contrast and on the basis of additional information relating to the image; whereby the correction mask determination unit is constructed so that in accordance with the additional information relating to the image the sharpening is reduced in characteristic image areas with skin colour or sky colour and/or the sharpening is increased in image areas with vegetation, whereby the image areas are detected on the basis of colours typical for them by analysis of the image data; and
an application unit, which applies the sharpening correction mask to the image data.

11. A program which, when it is loaded in a computer or runs on a computer, causes said computer to perform the method according to one of Claims 1 to 9.

12. A computer program medium on which the program according to Claim 11 is stored.

13. An image output device, in particular a photographic printer or photographic laboratory, in particular a minilab, or monitor or computer with monitor, with a device according to Claim 10 or with a computer on which the program according to Claim 11 runs or into which this program is loaded.

## Revendications

1. Procédé pour améliorer la netteté d'une image photographique comprenant une pluralité d'éléments d'image, dans lequel
un masque de correction de netteté est déterminé à partir des données d'image qui représentent l'image à rendre plus nette, les éléments du masque de correction de netteté décrivant la modification locale de la netteté, et de l'information supplémentaire et concernant l'image étant utilisée pour déterminer les éléments parallèlement à une qualité d'image, à savoir le contraste local, la netteté étant réduite selon l'information supplémentaire et concernant une image dans des zones d'image caractéristiques avec la couleur de la peau ou la couleur du ciel et/ou étant augmentée dans des zones d'image avec de la végétation, ces zones d'image étant détectées sur la base de teintes caractéristiques pour elles par l'analyse des données d'image ; et
le masque de correction de netteté étant appliqué aux données d'image.

2. Procédé selon la revendication 1, dans lequel l'information supplémentaire, qui est utilisée pour la détermination des éléments, comprend également au moins la teinte et/ou la saturation de couleur et/ou le contraste de couleur, éléments qui sont déterminés localement à proximité des endroits et/ou aux endroits auxquels les éléments du masque de correction de netteté se réfèrent.

3. Procédé selon la revendication 1 comprenant les étapes suivantes :
l'analyse des données d'image entraîne la détermination d'au moins une zone d'image caractéristique, comme par exemple une zone d'image avec la couleur de la peau ou une zone d'image avec de la végétation, la zone d'image caractéristique comprenant une pluralité d'éléments d'image, et
- une netteté théorique ou une plage de netteté théorique étant attribuée à au moins une zone d'image caractéristique reconnue et
- la modification au moyen du masque de correction de netteté s'effectuant de telle sorte que les éléments du masque de correction, qui se rapportent à des éléments d'image qui sont contenus dans la au moins une zone d'image caractéristique détectée, entraînent au moins un rapprochement de la netteté de la netteté théorique attribuée ou de la plage de netteté théorique attribuée.

4. Procédé selon la revendication 3, dans lequel on détermine à l'aide de l'analyse un critère d'appartenance qui définit le degré d'appartenance ou la probabilité de l'appartenance d'un élément d'image à une zone d'image caractéristique, et la modification de la netteté est déterminée aussi bien en tenant compte de la netteté théorique ou de la plage de netteté théorique que du critère d'appartenance attribué aux éléments d'image respectifs.

5. Procédé selon la revendication 3 ou 4, dans lequel les données d'image fixent pour les éléments d'image des valeurs chromatiques et des propriétés d'image qui comprennent au moins la clarté et la teinte, et
l'analyse des données d'image comprend les éléments suivants pour la détermination des zones d'image caractéristiques ;
- une disposition d'attribution est mise à disposition qui définit quelle valeur chromatique ou quelles valeurs chromatiques fait/font partie d'au moins une valeur chromatique caractéristique prédéfinie, une netteté théorique ou une plage de netteté théorique étant attribuée à chacune de la au moins une valeur chromatique caractéristique ;
- les valeurs chromatiques dans l'image sont déterminées sur la base des données d'image à rendre plus nettes ou sur des données d'image qui ont été déduites des données d'image à rendre plus nettes ; et
- on détermine si les valeurs chromatiques définies appartiennent à l'une de la au moins une valeur chromatique caractéristique ; et
la détermination du masque de correction de netteté comprenant ce qui suit en fonction des zones d'image caractéristiques :
- la détermination des éléments du masque de correction de netteté s'effectue en fonction de l'appartenance des valeurs chromatiques à l'une de la au moins une valeur chromatique caractéristique, la détermination se faisant en tenant compte de la netteté théorique ou de la plage de netteté théorique, qui est attribuée à la valeur chromatique caractéristique.

6. Procédé selon l'une des revendications 3 à 5, comprenant les étapes suivantes :
une analyse de l'image à corriger ou d'une image déduite de celle-ci est effectuée pour détecter les transitions entre les zones d'image qui comprennent une pluralité d'éléments d'image voisins et qui présentent une structuration différente ;
une détermination des éléments du masque de correction de netteté s'effectue en fonction du fait que les éléments se rapportent ou non aux transitions.

7. Procédé selon la revendication 1, dans lequel l'information supplémentaire se rapporte à la position d'artefacts dans l'image, les éléments du masque de correction de netteté étant déterminés également en fonction du fait qu'ils se rapportent à des positions dans l'image où il y a des artefacts ou non.

8. Procédé selon l'une des revendications précédentes, dans lequel, sur la base de l'information locale sur le contraste, on détermine un masque de netteté de base dont les éléments sont corrigés sur la base d'éléments attribués d'un masque d'information supplémentaire, afin de générer ainsi un masque de correction de netteté, le masque d'information supplémentaire étant déterminé à partir de l'information supplémentaire.

9. Procédé selon l'une des revendications précédentes, comprenant les étapes suivantes ;
un procédé d'enlèvement de détails d'image est appliqué aux données d'image à rendre nettes, de sorte que les données d'image grossière qui en résultent représentent une image grossière avec moins de détails que l'image à rendre nette, l'image grossière présentant une pluralité d'éléments d'image grossière ;
sur la base de l'information locale sur le contraste de l'image grossière, on détermine un masque de correction grossière qui décrit une correction de la netteté de l'image grossière,
sur la base de l'information supplémentaire, on corrige les éléments du masque de correction grossière, le masque de correction de netteté correspondant au masque corrigé de correction grossière, ou étant déterminé sur la base de celui-ci.

10. Dispositif pour rendre nette une image photographique avec une pluralité d'éléments d'image, comprenant
une unité de calcul de masque de correction, qui détermine un masque de correction de netteté à partir des données d'image qui représentent l'image à rendre plus nette, les éléments du masque de correction de netteté décrivant la modification locale de la netteté, l'unité de calcul du masque de correction déterminant les éléments sur la base du contraste local et sur la base d'une information supplémentaire concernant l'image ; l'unité de calcul de masque de correction étant conçue de telle sorte que, selon l'information supplémentaire concernant l'image, la netteté caractéristique est réduite dans des zones d'image avec la couleur de la peau ou la couleur du ciel et/ou la netteté étant améliorée dans des zones d'image avec de la végétation, les zones d'image étant reconnues sur la base de teintes caractéristiques pour elles par l'analyse des données d'image et
une unité d'application qui applique le masque de correction de netteté aux données d'image.

11. Programme qui, s'il est chargé dans un ordinateur ou fonctionne sur un ordinateur, demande à l'ordinateur de mettre en oeuvre le procédé selon l'une des revendications 1 à 9.

12. Moyen de programmation informatique, sur lequel le programme selon la revendication 11 est mémorisé.

13. Appareil d'édition d'image, en particulier imprimante photographique ou laboratoire photographique, en particulier mini-laboratoire, ou moniteur ou ordinateur avec moniteur, avec un dispositif selon la revendication 10 ou avec un ordinateur sur lequel le programme selon la revendication 11 fonctionne ou dans lequel ce programme est chargé.
